# EUROPÄISCHE PATENTANMELDUNG

(11) **EP 2 256 005 A1**
(43) Veröffentlichungstag der Anmeldung: **01.12.2010**
(21) Anmeldenummer: 10162416.1
(22) Anmeldetag: 10.05.2010
(51) Int. Cl.: B60R 21/13

(54) **Überrollschutzsystem für Kraftfahrzeuge**

(71) Anmelder: ISE Automotive GmbH, 51702 Bergneustadt (DE)
(72) Erfinder: Nass, Michael, 51702, Bergneustadt (DE); Helsper, Michael, 57078, Siegen (DE); Theus, Katrin, 51647, Gummersbach (DE)
(74) Vertreter: Wenzel & Kalkoff

(57) **Zusammenfassung**

Die Erfindung betrifft ein Überrollschutzsystem für Kraftfahrzeuge, mit einem von einer Antriebseinheit aus einer unteren Ruhelage in eine aufgestellte Überschlagsposition ausschwenkbaren, aus mindestens zwei gelenkig miteinander verbundenen Bügelschenkeln gebildeten Überrollbügel, der mit einem ersten Bügelende drehgelenkig und mit einem zweiten Bügelende in einer durch die Bügelschenkel gebildeten Ebene verstellbar an einer fahrzeugfest anordbaren Halterung gelagert ist. Um ein Überrollschutzsystem mit einem ausschwenkbaren Überrollbügel bereitzustellen, der in der Ruhelage einen nur geringen Platzbedarf erfordert und in der Überschlagsposition einen ausreichenden Überlebensraum bereitstellt, ist vorgesehen, dass das zweite Bügelende zur Aufstellung des Überrollbügels in die Überschlagsposition an der Halterung aus einer dem ersten Bügelende nahen Ablageposition in eine dem ersten Bügelende ferne Stützposition verschiebbar ist.

## Beschreibung

Die Erfindung betrifft ein Überrollschutzsystem für Kraftfahrzeuge, mit einem von einer Antriebseinheit aus einer unteren Ruhelage in eine aufgestellte Überschlagsposition ausschwenkbaren, aus mindestens zwei miteinander gelenkig verbundenen Bügelschenkeln gebildeten Überrollbügel, der mit einem ersten Bügelende drehgelenkig und mit einem zweiten Bügelende in einer durch die Bügelschenkel gebildeten Ebene verstellbar an einer fahrzeugfest anordbaren Halterung gelagert ist.

Überrollschutzsysteme der eingangs genannten Art sind in vielfältigen Ausgestaltungen aus dem Stand der Technik bekannt. Sie dienen bei Fahrzeugen wie Cabriolets, die keine starre Dachstruktur besitzen, zum Schutz der Insassen, indem sie beim Überschlag einen Überlebensraum für die Insassen aufspannen. Starre Überrollbügel werden dabei bei neueren Fahrzeugtypen vermehrt durch sogenannte aktive Systeme ersetzt, bei denen ein Überrollbügel im Normalzustand im Wesentlichen nicht sichtbar abgelegt ist und erst im Gefahrenfall, also bei einem drohenden Überschlag aufgestellt wird, um zu verhindern, dass die Fahrzeuginsassen durch das sich überschlagende Fahrzeug erdrückt werden.

Bekannte Lösungen weisen dabei typischerweise für jeden Sitz einen in einem fahrzeugfesten Kassettengehäuse linear geführten Überrollbügel auf, der im Normalzustand gegen eine Vorspannkraft durch eine Haltevorrichtung in einer unteren Ruhelage gehalten wird und im Überschlagsfall in eine obere stützende Stellung bringbar ist.

Darüber hinaus sind auch Konstruktionen von aufstellbaren Überrollbügeln bekannt, die sitzbezogen um eine Fahrzeuglängsachse aufschwenkbar sind. Bekannte Konstruktionen derartiger Faltbügel weisen jedoch den Nachteil auf, dass deren Bügelschenkel in der abgelegten Ruhelage axial hintereinander, d. h. quer zur Fahrzeugrichtung angeordnet sind und einen erheblichen Bauraum beanspruchen, damit die Schenkelelemente im aufgestellten Zustand eine ausreichende Höhe aufweisen und einen ausreichend großen Überlebensraum bereitstellen.

Der Erfindung liegt die Aufgabe zugrunde, ein Überrollschutzsystem mit einem ausschwenkbaren Überrollbügel bereitzustellen, der in der Ruhelage einen nur geringen Platzbedarf erfordert und in der Überschlagsposition einen ausreichenden Überlebensraum bereitstellt.

Die Erfindung löst die Aufgabe durch eine Überrollschutzvorrichtung mit den Merkmalen des Anspruchs 1. Vorteilhafte Weiterbildungen der Erfindung sind in den abhängigen Ansprüchen angegeben.

Kennzeichnend für das erfindungsgemäße Überrollschutzsystem ist, dass das zweite Bügelende zur Aufstellung des Überrollbügels in die Überschlagsposition aus einer dem ersten Bügelende nahen Ablageposition in eine dem ersten Bügelende ferne Stützposition verschiebbar ist. Gemäß der Erfindung ist der Überrollbügel aus mindestens zwei Bügelschenkeln gebildet, die unmittelbar oder mittelbar gelenkig miteinander verbunden sind. An ihren der gelenkigen Verbindung gegenüberliegenden Enden sind die Bügelschenkel gelenkig mit der am Fahrzeug anordbaren Halterung verbunden. Das erste Bügelende des Überrollbügels ist dabei drehgelenkig mit der Halterung verbunden, wohingegen das zweite Bügelende des Überrollbügels an der Halterung verschiebbar gelagert ist. In der Ruhelage, d. h. in der Position, in der der Überrollbügel in der Einbaulage abgelegt hinter den Fahrzeugsitzen angeordnet ist, ist das zweite Bügelende nahe dem Lagerpunkt des ersten Bügelendes angeordnet. Zur Verstellung des Überrollbügels aus der Ruhelage in die Überschlagsposition wird das zweite Bügelende in eine Überschlagsposition verschoben, in der das zweite Bügelende im deutlichen Abstand zu dem ersten Bügelende angeordnet ist. D. h. das zweite Bügelende entfernt sich bei der Aufstellbewegung von dem ersten Bügelende.

Die Bügelschenkel sind in der Ruhelage zumindest abschnittsweise übereinander und/oder ineinander und nicht wie aus dem Stand der Technik bekannt hintereinander - in der Einbaulage quer zur Fahrzeugrichtung betrachtet - angeordnet. Hierdurch lässt sich das erfindungsgemäße Überrollschutzsystem besonders kompakt ausführen, wobei gleichzeitig in der Überschlagsposition der Überrollbügel einen ausreichend großen Überlebensraum für die im Kraftfahrzeug befindlichen Insassen bereitstellt. Abhängig von der Ausgestaltung der Bügelschenkel weist das erfindungsgemäße Überrollschutzsystem somit den Vorteil auf, dass es neben einer geringen Erstreckung quer zur Fahrzeugrichtung auch eine nur geringe Einbauhöhe aufweist.

Grundsätzlich kann die verstellbare Lagerung des zweiten Bügelendes an der Halterung in beliebiger Weise ausgeführt werden. Nach einer besonders vorteilhaften Ausgestaltung der Erfindung ist jedoch an der Halterung eine Führung zur Lagerung des zweiten Bügels ausgebildet. Demgemäß kann auf eine separate Baugruppe zur verschiebbaren Führung des zweiten Bügelendes verzichtet werden. Beispielsweise kann an der Halterung eine an das zweite Bügelende angepasste und diese aufnehmende Schiene angeordnet sein.

Nach einer besonders vorteilhaften Ausgestaltung der Erfindung ist die Führung durch eine an der Halterung ausgebildete Kulisse, vorzugsweise durch zwei gegenüberliegend an der Halterung angeordnete Kulissen gebildet. Diese Ausgestaltung der Führung weist den Vorteil auf, dass sich die Kulissen besonderes einfach und kostengünstig herstellen lassen. Eine Lagerung des zweiten Bügelendes an der bzw. den Kulissen kann in einfacher Weise durch eine entsprechende Ausgestaltung des Bügelendes oder vorzugsweise durch sich durch das zweite Bügelende erstreckende und an die Kulisse angepasste Lagerungselemente wie Bolzen oder dergleichen realisiert werden. Die Verwendung von zwei, typischerweise gegenüberliegend angeordneten Kulissen erhöht dabei die Stabilität sowie die Funktionssicherheit des Überrollbügels. Insgesamt stellt diese Ausgestaltung der Erfindung somit in besonderem Maße die Möglichkeit dar, das Überrollschutzsystem besonders einfach und kostengünstig sowie gleichzeitig funktionssicher herzustellen.

Der Verlauf der Führung, bspw. der Kulisse, welche die Bewegungsbahn des zweiten Bügelendes bei der Aufstellbewegung vorgibt, kann grundsätzlich in beliebiger Weise, in der einfachsten Weise gradlinig ausgebildet sein. Nach einer vorteilhaften Ausgestaltung der Erfindung ist die Führung, ggf. die Kulisse, jedoch mindestens abschnittsweise, vorzugsweise im Bereich des ersten Bügelendes, bogenförmig ausgebildet. Besonders vorteilhafterweise weist die Führung/Kulisse eine dem Überrollbügel abgewandte Krümmung auf.

Gemäß dieser Ausgestaltung der Erfindung weist die Führung/Kulisse einen Verlauf auf, durch den das zweite Bügelende im Falle einer Verlagerung aus der Ablageposition in die Überschlagsposition neben einer Bewegungskomponente in Y-Richtung, d. h. in Fahrzeugquerrichtung, ferner eine Bewegung in Z-Richtung, wobei mit Z-Richtung die Fahrzeughochachse gemeint ist, erfährt. Im Falle einer dem Überrollbügel abgewandten Krümmung wird die Aufstellbewegung begünstigt, nachdem das Drehmoment für die Aufstellbewegung durch die Kraftkomponente in negativer Z-Richtung, d. h. in der Einbaulage gerichtete zum Fahrzeugboden, vergrößert wird.

Zur Verstellung des zweiten Bügelendes können dabei grundsätzlich alle Arten von Antriebssystemen wie hydraulische Systeme, motorische Antriebe oder dergleichen verwendet werden, wobei vorzugsweise der Überrollbügel entgegen einer Federvorspannung in der Ruhelage gehalten ist und im Überschlagsfall die Halterung aufgelöst und der Überrollbügel aufgrund der Federvorspannung aufgestellt wird.

Die Lagerung des Bügelendes an der Halterung, insbesondere an der Kulisse, kann in beliebiger Weise erfolgen. Nach einer besonders vorteilhaften Ausgestaltung der Erfindung ist das zweite Bügelende jedoch über einen an diesem angeordneten und mit der Führung, ggf. der Kulisse in Eingriff befindlichen Bolzen an der Halterung gelagert. Diese Ausgestaltung der Erfindung lässt sich besonders einfach und kostengünstig herstellen, wobei der Bolzen sich im Bereich des zweiten Bügelendes durch diesen erstreckt und ggf. in die Kulisse hineinragt.

Die Ausgestaltung des Bolzens kann dabei in Abhängigkeit von der Anordnung an dem zweiten Bügelende sowie der Ausgestaltung der Kulisse in beliebiger Weise gewählt werden. Grundsätzlich erfüllt bereits ein einfacher Bolzen die Funktion der verschiebbaren Lagerung des zweiten Bügelendes an der Führung, insbesondere der Kulisse. Nach einer besonders vorteilhaften Ausgestaltung der Erfindung ist der Bolzen jedoch als Verriegelungsbolzen ausgebildet, der in der Stützposition derart mit der Halterung in Eingriff gelangt, dass das zweite Bügelende an der Halterung arretiert ist.

Gemäß dieser Ausgestaltung der Erfindung dient der als Verriegelungsbolzen ausgestaltete Bolzen nicht allein der Führung des zweiten Bügelendes, sondern kann überdies zur Arretierung des zweiten Bügelendes in der Stützposition und somit zur Festlegung des Überrollbügels verwendet werden. Der Verriegelungsbolzen ist hierzu derart ausgebildet, dass er in der Überschlagsposition des zweiten Bügelendes dieses an der Halterung verriegelt, so dass ein ungewolltes Zusammenklappen des Überrollbügels verhindert wird, wozu der Verriegelungsbolzen bspw. zum Eingriff mit einer separaten Verriegelungseinheit ausgebildet sein kann.

Nach einer vorteilhaften Weiterbildung der Erfindung ist der Verriegelungsbolzen jedoch derart ausgebildet, dass er in der Stützposition vorgespannt, insbesondere federvorgespannt in Arretierungsöffnungen an der Halterung eingreift. Der Verriegelungsbolzen weist dazu vorzugsweise in Richtung auf den Verriegelungsbolzen, insbesondere in dessen Längsachsenrichtung verstellbare Zapfen auf, die aufgrund einer Federvorspannung in der Überschlagsposition in entsprechende Arretierungsöffnungen eingreifen. Die Zapfen verhindern im Zusammenwirken mit den Arretierungsöffnungen sowie aufgrund der Federvorspannung, dass es zu einer ungewollten Verlagerung des zweiten Bügelendes kommt. Hierzu wäre es nämlich zunächst erforderlich, die Zapfen entgegen ihrer Vorspannung mit den Arretierungsöffnungen außer Eingriff zu bringen. Diese Ausgestaltung der Erfindung ermöglicht somit eine kostengünstige Festlegung des Überrollbügels in der Überschlagsposition und erlaubt darüber hinaus eine einfache Reversierbarkeit des Systems.

Nach einer weiteren Ausgestaltung der Erfindung ist an der Halterung ein in der Stützposition mit dem zweiten Bügelende in Eingriff bringbarer Anschlag angeordnet. Der Anschlag kann dabei zum einen dazu verwendet werden, die Überschlagsposition des zweiten Bügelendes nach Art eines Endanschlags festzulegen. Darüber hinaus ermöglicht die Verwendung des Anschlags, insbesondere im Falle einer entsprechenden strukturellen Ausgestaltung, eine besonders zuverlässige Übertragung der im Überschlagsfall auf den Überrollbügel wirkenden Kräfte über das zweite Bügelende auf die Fahrzeugkarosserie. Das Anschlagelement dient dabei als Verstärkungselement und verbessert in ergänzender Weise die Stabilität des Überrollschutzsystems in der Überschlagsposition. Besonderes vorteilhafterweise weist der Anschlag im Falle der Verwendung einer Kulisse hierzu eine Aufnahmeöffnung auf, die im Bereich der Stützposition die Kulisse umgreift. Diese Ausgestaltung der Erfindung lässt sich besonders einfach und kostengünstig herstellen. Durch die entsprechende Ausgestaltung des Anschlags wird die Halterung im Bereich der Stützposition verstärkt, wobei es die Anpassung des Anschlags an die Form der Kulisse ermöglicht, dass das zweite Bügelende, ggf. ein Bolzen, über die Aufnahmeöffnung in einfacher Weise mit dem Anschlag in Eingriff gelangt. Der Anschlag lässt sich dabei in beliebiger Weise an der Halterung befestigen. Bevorzugt ist dieser jedoch angeschweißt, was eine besonders kostengünstige und einfach sowie zugleich stabile Verbindung darstellt.

Nach einer weiteren Ausgestaltung der Erfindung ist an dem Überrollbügel im Bereich der gelenkig miteinander verbundenen Bügelschenkel ein Deformationselement angeordnet. Dieses erlaubt es, die im Überschlagsfall wirkenden Kraftspitzen kontrolliert durch Deformation abzubauen, wodurch die Stabilität des Überrollschutzsystems in ergänzender Weise gesteigert wird. Ferner kann das Deformationselement geometrisch so angepasst werden, dass der Überlebensraum in Y-Richtung zur Fahrzeugseite vergrößert werden kann.

Die Anordnung des Deformationselements im Bereich der gelenkig miteinander verbundenen Bügelschenkel kann grundsätzlich frei gewählt werden. So kann dieses mit den Bügelschenkeln starr oder gelenkig verbunden sein. Nach einer besonders vorteilhaften Ausgestaltung der Erfindung verbindet das Deformationselement jedoch die der Halterung abgewandten Enden der Bügelschenkel gelenkig miteinander. Gemäß dieser Ausgestaltung der Erfindung sind die Bügelschenkel nicht unmittelbar, sondern mittelbar, d. h. unter Zwischenschaltung des Deformationselements gelenkig miteinander verbunden. Hierbei kann das Deformationselement sowohl mit beiden Bügelschenkeln gelenkig als auch mit einem Bügelschenkel starr und mit dem anderen Bügelschenkel gelenkig verbunden sein.

Nach einer besonders vorteilhaften Ausgestaltung der Erfindung ist das Deformationselement einenends und/oder anderenends gelenkig, vorzugsweise drehgelenkig mit den Bügelschenkeln verbunden. Nach einer weiteren Ausgestaltung der Erfindung ist das Überrollschutzsystem derart ausgebildet, dass das zweite Bügelende im montierten Zustand am Fahrzeug in der Ruheposition fahrzeugmittig und in der Überschlagsposition fahrzeugaußenseitig angeordnet ist. Diese Ausgestaltung der Erfindung gewährleistet eine besonders hohe Stabilität des Überrollschutzsystems im Überschlagsfall, nachdem die auftretenden Belastungen zunächst auf den nur drehgelenkig mit der Halterung verbundenen Bügelschenkel wirken. Darüber hinaus ermöglicht diese Ausgestaltung der Erfindung eine bauraumsparende Ausgestaltung des Überrollschutzsystems im Bereich der Fahrzeugmitte, wohingegen bauraumintensivere Komponenten fahrzeugaußenseitig angeordnet werden können.

Ausführungsbeispiele der Erfindung werden nachstehend mit Bezug auf die Zeichnungen näher erläutert. In den Zeichnungen zeigen:
- Fig. 1: eine perspektivische Ansicht einer ersten Ausführungsform eines Überrollschutz- systems;
- Fig. 1a: eine Detailansicht des Überrollschutzsystems von Fig. 1;
- Fig. 2: eine Seitenansicht des Überrollschutzsystems von Fig. 1 in einer Ruhelage;
- Fig. 3: eine Seitenansicht des Überrollschutzsystems von Fig. 1 in einer Überschlagspo- sition;
- Fig. 4: eine Schnittansicht des Überrollschutzsystems von Fig. 3 entlang der Schnittlinie A-A;
- Fig. 5: eine Skizze einer Seitenansicht des Überrollschutzsystems von Fig. 1 in einer Überschlagsposition;
- Fig. 6: eine Skizze einer Seitenansicht einer zweiten Ausführungsform eines Überroll- schutzsystems in der Überschlagsposition;
- Fig. 7: eine Skizze einer Seitenansicht einer dritten Ausführungsform eines Überroll- schutzsystems in der Überschlagsposition;
- Fig. 8: eine Skizze einer Seitenansicht einer vierten Ausführungsform des Überroll- schutzsystems in der Überschlagsposition;
- Fig. 9a: eine perspektivische Ansicht einer fünften Ausführungsform eines Überroll- schutzsystems in der Überschlagsposition und
- Fig. 9b: eine perspektivische Ansicht des Überrollschutzsystems von Fig. 9a in der Ruhe- lage.

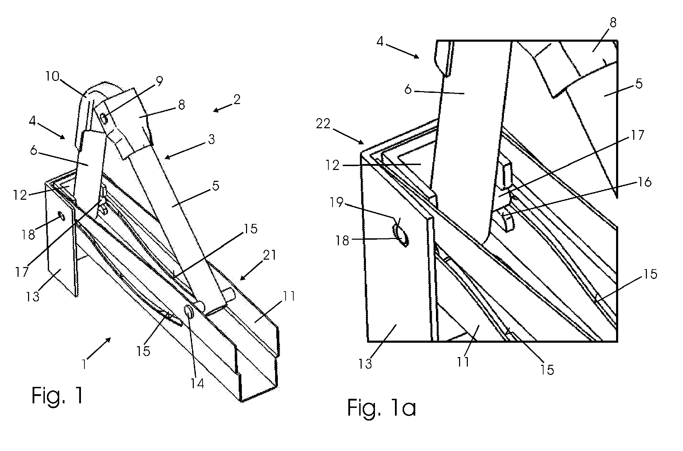

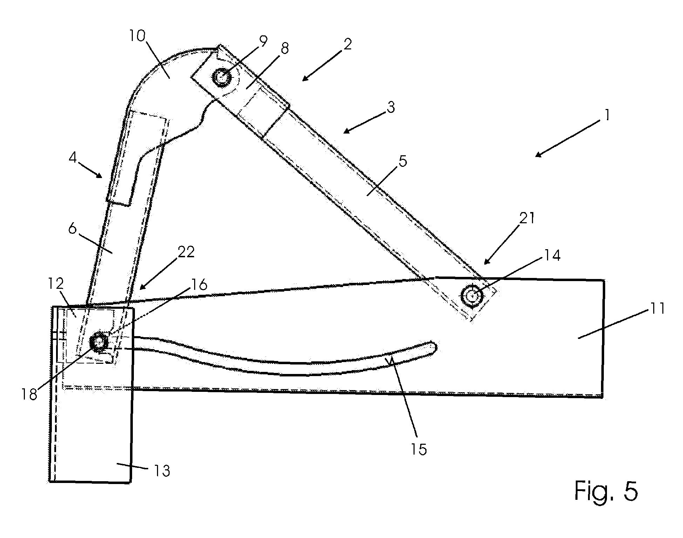

In den Fig. 1, 1a - 5 ist eine erste Ausführungsform eines Überrollschutzsystems 1 dargestellt. Dieses weist einen aus einem ersten Bügelschenkel 3 und einem zweiten Bügelschenkel 4 gebildeten Überrollbügel 2 auf, wobei die Bügelschenkel 3, 4 einenends gelenkig miteinander verbunden sind. Der erste Bügelschenkel 3 wird dabei durch ein Rohrelement 5 gebildet, an dem ein Aufnahmeelement 8 angeordnet ist. Über das Aufnahmeelement 8 ist der erste Bügelschenkel 3 gelenkig mit einem Deformationselement 10 verbunden, welches seinerseits zur Bildung des zweiten Bügelschenkels 4 starr mit einem Rohrelement 6 verbunden ist. Die gelenkige Verbindung des ersten Bügelschenkels 3 mit dem zweiten Bügelschenkel 4 erfolgt über einen sich durch das Deformationselement 10 sowie das Aufnahmeelement 8 erstreckenden Lagerbolzen 9.

Mit seinem ersten Bügelende 21 ist der Überrollbügel 2, bzw. der erste Bügelschenkel 3, drehgelenkig mit einer Halterung 11 des Überrollschutzsystems 1 verbunden. Hierzu erstreckt sich im Bereich des ersten Bügelendes 21 ein Lagerbolzen 4 durch das Rohrelement 5, so dass der Lagerbolzen 4 mit seinen Enden gelenkig an der Halterung 11 gelagert ist. Das zweite Bügelende 22 des Überrollbügels 2, bzw. des zweiten Bügelschenkels 4, weist seinerseits einen sich im Bereich des Endes des Rohrelements 6 durch dieses erstreckenden Verriegelungsbolzen 17 auf. Der Verriegelungsbolzen 17 weist eine Hülse 20 auf, in der zwei Zapfen 18 in Längsachsenrichtung des Verriegelungsbolzens 17 verschiebbar und in entgegengesetzter Richtung vorgespannt gelagert sind. Die Zapfen 18 des Verriegelungsbolzens 17 erstrecken sich zur Führung des zweiten Bügelendes 21 durch in gegenüberliegende Wandungen der Halterung 11 angeordnete Kulissen 15 und führen so das zweite Bügelende 22 während der Aufstellposition an der Halterung 11.

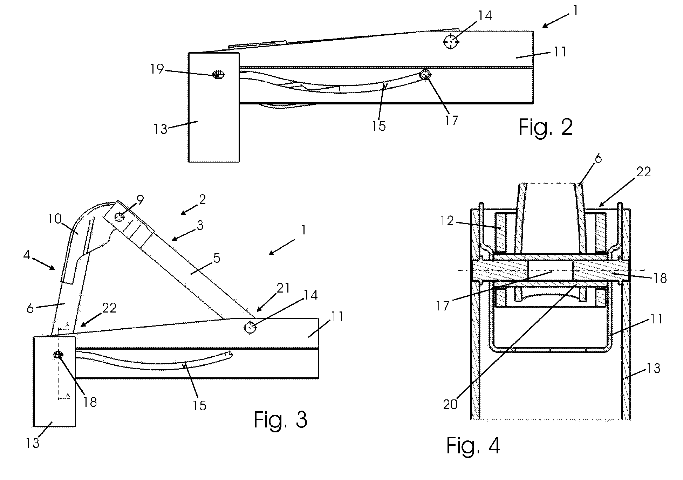

Im Falle eines Überschlags erfolgt, hervorgerufen durch eine Antriebsvorrichtung - hier nicht dargestellt - bspw. durch eine Federvorspannung, eine Verlagerung des zweiten Bügelendes 22 aus der in Fig. 2 dargestellten Ruhelage in die in Fig. 3 dargestellte Überschlagsposition. Die Kulisse 15 gibt dabei die Bewegungsrichtung des zweiten Bügelendes 22 vor, wobei sich die Zapfen 18 zunächst, aufgrund der vom Überrollbügel 2 abgewandten Krümmung der Kulisse 15 in der Einbaulage des Fahrzeugs in Richtung zum Fahrzeugboden bewegen. In der Überschlagsposition des zweiten Bügelendes 22 gelangen die Zapfen 18 aufgrund einer hier nicht dargestellten, auf die Zapfen 18 wirkenden Federvorspannung in Eingriff mit Arretierungsöffnungen 19 an einem Stützelement 13, welches mit der Halterung 11 verbunden ist, so dass die Überschlagsposition des Überrollbügels 2 arretiert ist. In der Überschlagsposition gelangt der Verriegelungsbolzen 17 ferner über der Hülse 18 in Eingriff mit einem Anschlag 12, wobei die Hülse 18 in Aufnahmeöffnungen 16 des Anschlags 12 anliegt. Die Aufnahmeöffnungen 16 verlaufen dabei benachbart zur Kulisse 15, d. h. sie umgreifen die Kulisse 15 im Endbreich, so dass die Hülse 18 des Verriegelungsbolzens 17 bei der Aufstellbewegung selbsttätig mit dem Anschlag 12 in Eingriff gelangt. Dieser ist seinerseits mit der Halterung 11 verschweißt und stabilisiert den Überrollbügel 2 in der Überschlagsposition.

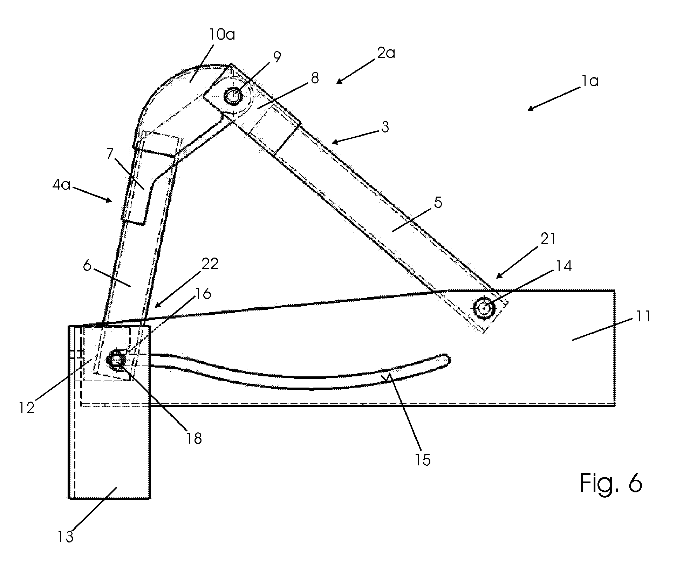

In Fig. 6 ist ein Überrollschutzsystem 1a dargestellt, welches sich von dem zuvor dargestellten Überrollschutzsystem 1 dadurch unterscheidet, dass der zweite Bügelschenkel 4a durch das Rohrelement 6 sowie ein mit dem Rohrelement 6 verbundenes Eckstück 7 gebildet ist, wobei das Eckstück 7 zur Bildung des Überrollbügels 2a über den Lagerbolzen 9 mit dem ersten Bügelschenkel 3 gelenkig verbunden ist. Darüber hinaus weist der Überrollbügel 2a ein separates Deformationselement 10a auf, welches einenends mit dem ersten Bügelschenkel 3 gelenkig verbunden, anderenends jedoch über Anschlagflächen an dem zweiten Bügelschenkel 4a anliegt.

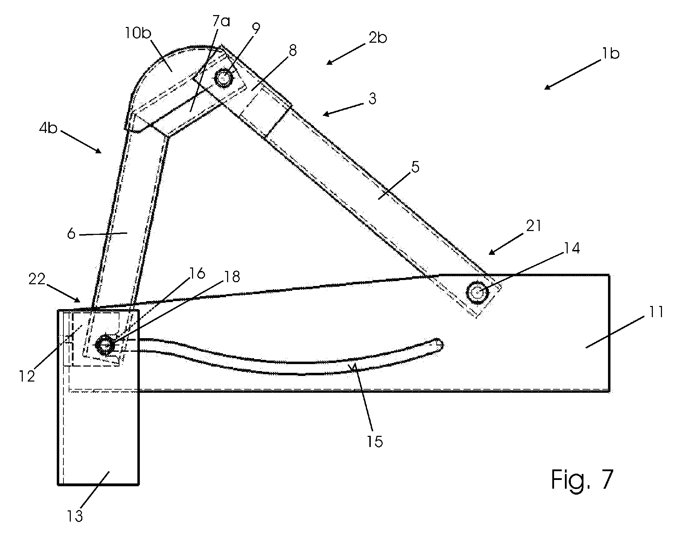

Bei dem in Fig. 7 dargestellten Überrollschutzsystem 1b ist der zweite Bügelschenkel 4b aus einem alternativen Eckstück 7a sowie dem Rohrelement 6 zusammengesetzt, wobei der zweite Bügelschenkel 4b über das Eckstück 7a gelenkig mit dem ersten Bügelschenkel 3 verbunden ist. Wie auch in dem in Fig. 6 dargestellten Überrollschutzsystem 1a, so weist auch das in Fig. 7 dargestellte Überrollschutzsystem 1b ein, jedoch abgewandeltes, Deformationselement 10b auf.

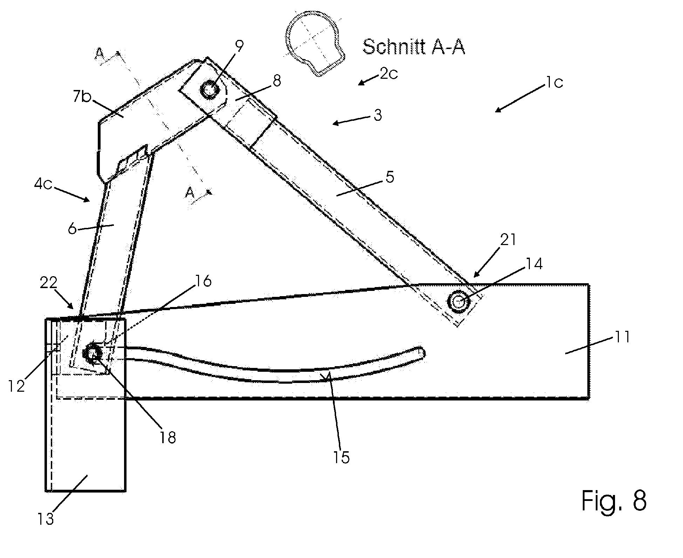

Eine weitere Ausgestaltung eines Überrollschutzsystems 1c ist in Fig. 8 dargestellt. Bei diesem ist der zweite Bügelschenkel 4c durch ein Rohrelement 6 sowie ein mit dem Rohrelement 6 verbundenes Eckstück 7b gebildet. Das Eckstück weist dabei einen alternativen Querschnitt auf, wie im Schnitt A-A dargestellt, und dient dabei gleichzeitig als Deformationselement.

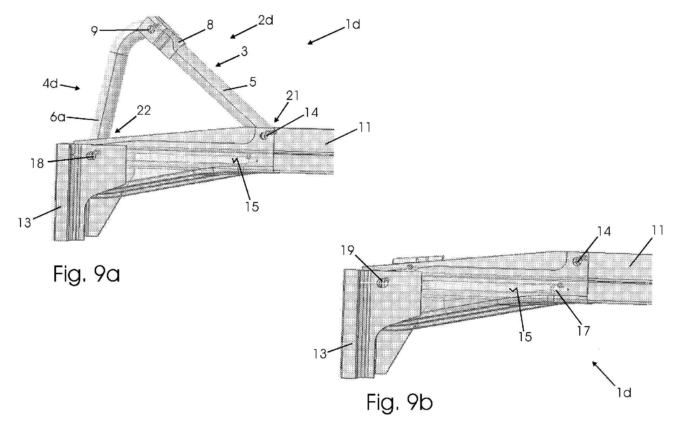

Bei dem weiteren, in Fig. 9a und 9b dargestellten Überrollschutzsystem 1d besteht der Unterschied gegenüber den zuvor dargestellten Überrollschutzsystemen darin, dass die Kulisse 15 gradlinig verläuft und ferner der zweite Bügelschenkel 4d durch ein abschnittsweise gebogenes Rohrelement 6a gebildet wird, welches in bekannter Weise mit dem ersten Bügelschenkel 3 über den Lagerbolzen 9 gelenkig verbunden ist.

## Patentansprüche

1. Überrollschutzsystem für Kraftfahrzeuge, mit einem von einer Antriebseinheit aus einer unteren Ruhelage in eine aufgestellte Überschlagsposition ausschwenkbaren, aus mindestens zwei gelenkig miteinander verbundenen Bügelschenkeln gebildeten Überrollbügel, der mit einem ersten Bügelende drehgelenkig und mit einem zweiten Bügelende in einer durch die Bügelschenkel gebildeten Ebene verstellbar an einer fahrzeugfest anordbaren Halterung gelagert ist,
**dadurch gekennzeichnet, dass**
das zweite Bügelende (22) zur Aufstellung des Überrollbügels (2, 2a, 2b, 2c, 2d) in die Überschlagsposition an der Halterung (11) aus einer dem ersten Bügelende (21) nahen Ablageposition in eine dem ersten Bügelende (21) ferne Stützposition verschiebbar ist.

2. Überrollschutzsystem nach Anspruch 1, **dadurch gekennzeichnet, dass** an der Halterung (11) eine Führung (15) zur Lagerung des zweiten Bügelendes (22) ausgebildet ist.

3. Überrollschutzsystem nach Anspruch 1 oder 2, **dadurch gekennzeichnet, dass** die Führung als an der Halterung (11) ausgebildete Kulisse (15), vorzugsweise durch zwei gegenüberliegend an der Halterung (11) angeordnete Kulissen (15) gebildet ist.

4. Überrollschutzsystem nach einem der vorhergehenden Ansprüche, **dadurch gekennzeichnet, dass** die Kulisse (15) mindestens abschnittsweise, vorzugsweise im Bereich des ersten Bügelendes (21) bogenförmig ausgebildet ist, besonders vorteilhafterweise eine dem Überrollbügel (2, 2a, 2b, 2c, 2d) abgewandte Krümmung aufweist.

5. Überrollschutzsystem nach einem der vorhergehenden Ansprüche, **dadurch gekennzeichnet, dass** das zweite Bügelende (22) über einen an diesem angeordneten, mit der Kulisse (15) in Eingriff befindlichen Bolzen (17) an der Halterung (11) gelagert ist.

6. Überrollschutzsystem nach einem der vorhergehenden Ansprüche, **dadurch gekennzeichnet, dass** der Bolzen als Verriegelungsbolzen (17) ausgebildet ist, der in der Stützposition derart mit der Halterung (11) in Eingriff gelangt, dass das zweite Bügelende (22) an der Halterung (11) arretiert ist.

7. Überrollschutzsystem nach einem der vorhergehenden Ansprüche, **dadurch gekennzeichnet, dass** der Verriegelungsbolzen (17) in der Stützposition vorgespannt, insbesondere federvorgespannt in Arretierungsöffnungen (19) an der Halterung (11) angeordnet ist.

8. Überrollschutzsystem nach einem der vorhergehenden Ansprüche, **dadurch gekennzeichnet, dass** an der Halterung (11) ein in der Stützposition mit dem zweiten Bügelende (22) in Eingriff bringbarer Anschlag (12) angeordnet ist.

9. Überrollschutzsystem nach einem der vorhergehenden Ansprüche, **dadurch gekennzeichnet, dass** die Halterung (12) eine Aufnahmeöffnung (16) aufweist, die die Kulisse (15) im Bereich der Stützposition umgreift.

10. Überrollschutzsystem nach einem der vorhergehenden Ansprüche, **dadurch gekennzeichnet, dass** an dem Überrollbügel (2, 2a, 2b, 2c, 2d) im Bereich der gelenkig miteinander verbundenen Bügelschenkel (3, 4, 4a, 4b, 4c, 4d) ein Deformationselement (10, 10a, 10b) angeordnet ist.

11. Überrollschutzsystem nach einem der vorhergehenden Ansprüche, **dadurch gekennzeichnet, dass** das Deformationselement (10, 10a, 10b) die der Halterung (11) abgewandten Enden der Bügelschenkel (3, 4, 4a, 4b, 4c, 4d) gelenkig miteinander verbindet.

12. Überrollschutzsystem nach einem der vorhergehenden Ansprüche, **dadurch gekennzeichnet, dass** das Deformationselement (10, 10a, 10b) einenends und/oder anderenends gelenkig, vorzugsweise drehgelenkig mit den Bügelschenkeln (3, 4, 4a, 4b, 4c, 4d) verbunden ist.

13. Überrollschutzsystem nach einem der vorhergehenden Ansprüche, **dadurch gekennzeichnet, dass** dieses derart ausgebildet ist, dass das zweite Bügelende (22) im montierten Zustand in der Ruheposition fahrzeugmittig und in der Überschlagsposition fahrzeugaußenseitig angeordnet ist.
